# EUROPEAN PATENT SPECIFICATION

(11) **EP 1 461 681 B1**
(45) Date of publication and mention of the grant of the patent: **11.10.2006**
(21) Application number: 03701491.7
(22) Date of filing: 07.01.2003
(51) Int. Cl.: G06F 21/00

(54) **PROTECTING A DEVICE AGAINST UNINTENDED USE IN A SECURE ENVIRONMENT**
SCHUTZ EINES GERÄTES GEGEN UNERWÜNSCHTE VERWENDUNG IN EINEM SICHEREN UMFELD
PROTECTION D'UN DISPOSITIF CONTRE UNE UTILISATION NON VOULUE DANS UN ENVIRONNEMENT SECURISE

(30) Priority: 07.01.2002 DE 10200288
(43) Date of publication of application: 29.09.2004
(73) Proprietor: SCM Microsystems GmbH, 85737 Ismaning (DE)
(72) Inventor: BRESSY, Philippe, F-83190 Ollioules (FR); Loisel, Yann, F-13600 La Ciotat (FR)
(74) Representative: Degwert, Hartmut
(86) International application number: PCT/EP2003/000075
(87) International publication number: WO 2003/058409

(56) References cited:
- EP-A- 1 168 172
- WO-A-00/19299
- US-A- 6 061 449
- US-A1- 2001 018 745

## Description

### Field of the Invention

The present invention relates to a method of protecting a device against unintended use in a secure environment and, in particular, in a conditional access environment.

### Background of the Invention

Examples of applications that involve secure transactions are electronic payment and banking; examples of applications that involve conditional access are Digital Pay TV, recording of Digital TV and Video on Demand. A device for executing such applications can be a module that is embedded in an environment such as a Set-Top-Box, a chip embedded on the motherboard of a Set-Top-Box, a Smart Card reader or a pluggable module such as a PC card that typically includes a Smart Card reader. While hardware components in the module ensure high performance for tasks such as descrambling of real time video streams, the Smart Card mainly has a security functionality. Application code is typically stored into an external memory of the device, such as a FLASH memory.

Conventionally, these devices rely on security that resides in the Smart Card. To the extent, however, that overall security depends on procedures contained in application code stored in external or even in internal memory of the device, the security functions of the Smart Card can be worked-around by replacement or modification of application code.

WO 00/19299 discloses an apparatus for providing a secure processing environment. The apparatus encloses a processor unit and a read/write memory, the read/write memory being connected to a cipherer as well as to an authenticator. Encrypted information which is written to the read/write memory is transferred to the cipherer for decryption if needed. The decrypted information is re-written into the read/write memory. The processor unit can only use the decrypted information, if the authenticator has authenticated the decrypted information by using a secret key.

### Summary of the Invention

The present invention provides a secure architecture for a device that executes applications under high requirements of security.

According to a first aspect of the invention, a method of protecting a device against unintended use in a secure environment is provided, where the device is adapted to execute applications that involve conditional access to at least one of valuable contents and services, and the device includes an integrated circuit that has a central processing unit, an internal memory and input/output connections for external memory, all incorporated on a single chip. The external memory and the chip are uniquely linked by encrypting sensitive application code and data with a secret key stored in a secured memory area of the internal memory of the chip, the encrypted code and data being then stored in the external memory. Any use of the sensitive application code and data will be possible only after successful decryption with the secret key. A random number and a hash value are also encrypted with the secret key and stored in the external memory. At least on each reset of the device, the encrypted random number and the hash value are decrypted with the secret key, and decryption of the encrypted sensitive code and data is only allowed if the decrypted hash value equals a hash value calculated from the decrypted random number. As a result, the chip and external memory are uniquely paired, i.e. the chip cannot be used with an external memory the sensitive contents of which have been altered or exchanged.

A device protected by the inventive method includes an integrated circuit that has a central processing unit, an internal memory and input/output connections for an external memory, all incorporated on a single chip. The internal memory includes a secured memory area accessible to the central processing unit only. The secured memory area contains a secret encryption key used for encryption of sensitive data stored in the external memory. Preferably, the chip includes a random number generator. A hash value is obtained from a random number generated by the random number generator, the random number with its hash value are encrypted with the secret key, and the encrypted random number with its hash value are stored in the external memory. As a result, the device has a chip that is uniquely paired with the external memory. Since the sensitive data and/or code are of such nature that proper execution of an application by the device will not be possible unless these data and/or code have been successfully decrypted, and the chip will not decrypt the data and/or code unless it has successfully checked its pairing with the external memory, the device is effectively protected from use with other than authentic contents of the external memory.

The secured memory area may contain authenticity verification data. The internal memory may also include a read only memory area containing mandatory authenticity verification code allowing an application to be executed only after successful verification of authenticity. Therefore, only authentic application code is executed by the device, and any replacement of application code attempting to circumvent safety functionality will not be successful.

As used herein, "authenticity" is understood in a broad sense. "Authenticity" includes integrity, and any fraudulent modification of application code or sensitive data results in refusal by the device to execute the application.

Any sensitive application code and data are never visible in the clear from outside of the device. Sensitive application code and data are stored in encrypted form and decrypted within the device for execution of the application. By adding confidentiality to authenticity, an attack will be even more difficult, if not impossible, because the contents in memory, as visible from outside of the device, will not be intelligible.

According to a further aspect of the invention, any application code down-loaded into the device is signed with a private key of an asymmetric key pair and proper execution of the application is subject to a verification of the signature with a public key of the key pair. In addition, any application code stored into the external memory is encrypted with a secret key that is stored in a secured memory area of the internal memory.

### Short Description of Drawings

Further advantages and features of the invention will become apparent from the following description with reference to the appending drawings. In the drawings:
Fig. 1 is an overall schematic diagram of a device with a generic secure system architecture for a Conditional Access Module (CAM) and a Smart Card Reader (SCR);
Fig. 2A and 2B are diagrams illustrating different examples of procedures for preparing signed application code to be down-loaded into the device;
Fig. 3A to 3D are diagrams illustrating corresponding examples of signature verification procedures within the device;
Fig. 4A is a block diagram illustrating a procedure for preparing encrypted application code to be downloaded into the device;
Fig. 4B is a flow-chart illustrating decryption of the down-loaded application;
Fig. 5A and 5B are flow charts illustrating encryption and decryption of application code stored in external memory of the device;
Fig. 6 is a diagram illustrating a procedure of chip pairing whereby a chip is uniquely linked to contents in an external memory of the device;
Fig. 7 is a diagram illustrating a chip pairing verification procedure;
Fig. 8 is a diagram illustrating a first step of a chip personalization process; and
Fig. 9 is a diagram illustrating a second step of a chip personalization process;
Fig. 10 is a schematic representation of a variable assignment between external chip pins and internal chip signal lines; and
Fig. 11 is a block diagram of an intrusion detection arrangement.

### Detailed Description of the Invention

### Overall Device Design

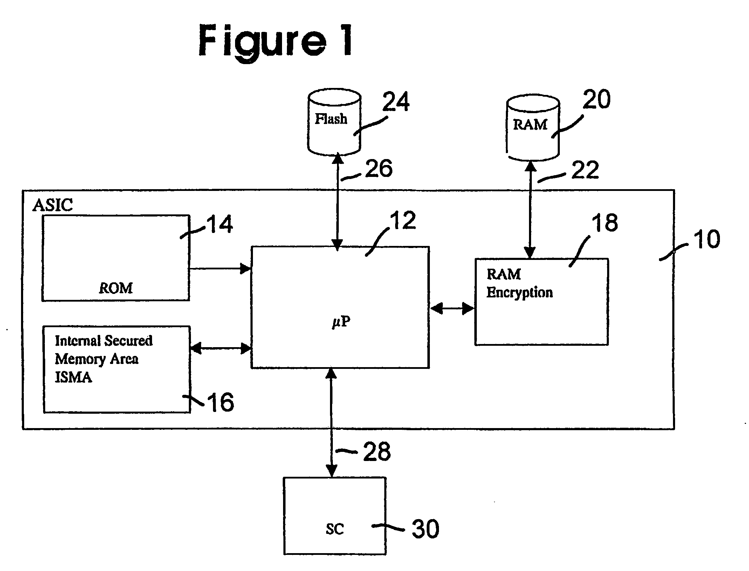

Referring now to Fig. 1, the device of the present invention includes an application specific integrated circuit (ASIC) that is generally designated at reference numeral 10. The ASIC 10 incorporates, on a single semiconductor chip, a number of components; among these components, the following are essential to the invention (although the ASIC will typically include other components):
- a microprocessor unit (µP) 12,
- a read only memory (ROM) 14 connected to µP 12,
- an internal secured memory area (ISMA) 16 also connected to µP 12.

Preferably, as shown in Fig. 1, the ASIC also includes a hardware encryption unit 18 connected to µP 12 and to an external random access memory (RAM) 20 via a bi-directional interface 22, symbolized in Fig. 1 by a double arrow. In addition to external RAM 20, the device 10 has an external Flash memory 24 connected to µP 12 via a bi-directional interface 26 symbolized in Fig. 1 by a double arrow. The device 10 further includes a bi-directional interface 28 for connection to an external Smart Card (SC) 30.

In a specific example, the device 10 incorporates conditional access (CA) functionality. Such a device is generally referred to as a CAM (Conditional Access Module) for use with a Set-Top-Box (STB) in a digital TV (DTV) environment. A CAM can be embedded within the STB, or it is a pluggable PC (PCMCIA) card fitting into a Common Interface (CI) slot of the STB, and incorporates a Smart Card Reader (SCR). Other embodiments of the device 10 include a SCR for use with a Personal Computer under high requirements of security.

### Signed Down-Load

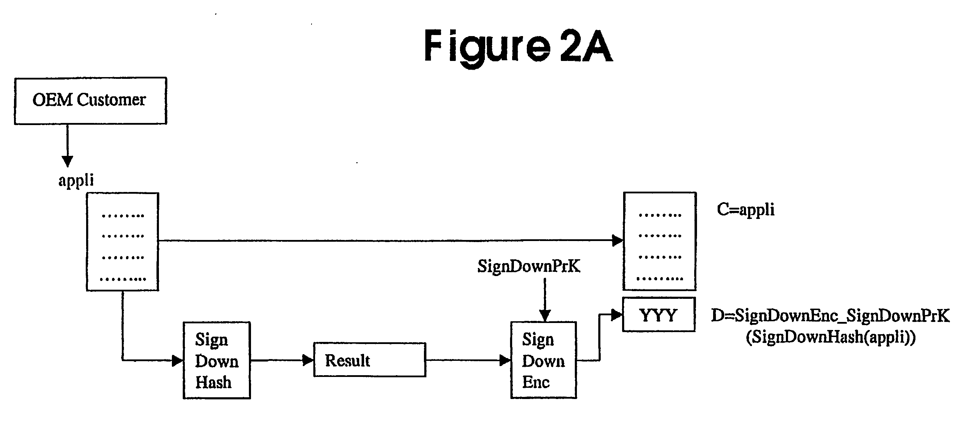

With reference to Fig. 2A, a first aspect of the invention is that any application to be executed by the device, at least to the extent it involves sensitive transactions, is checked for authenticity and integrity. Generally stated, the application code is signed with a key, and execution of the application by the device is subject to a positive verification of the signature. Various embodiments of this concept are proposed herein.

In each example, a hash function obtains a hash value from the application code. The hash value is encrypted with a private key of a key pair. The public key of the key pair is stored in the memory of the device and, being a public key not specific to a particular customer, it can be stored in ROM 14.

In a first example, as seen in Fig. 2A, the key pair includes a private key referred to as "SignDownPrK"; in the first example, this SignDownPrK is a Secure Architecture Designer's private key (SADPrivateKey). The corresponding public key (SADPublicKey) is stored in ROM 14. In Fig. 2A, "C" is application code in the clear, intended to be downloaded into the device. Further, a signature "D" in Fig. 2A is the hash value of the application code as encrypted with the private key.

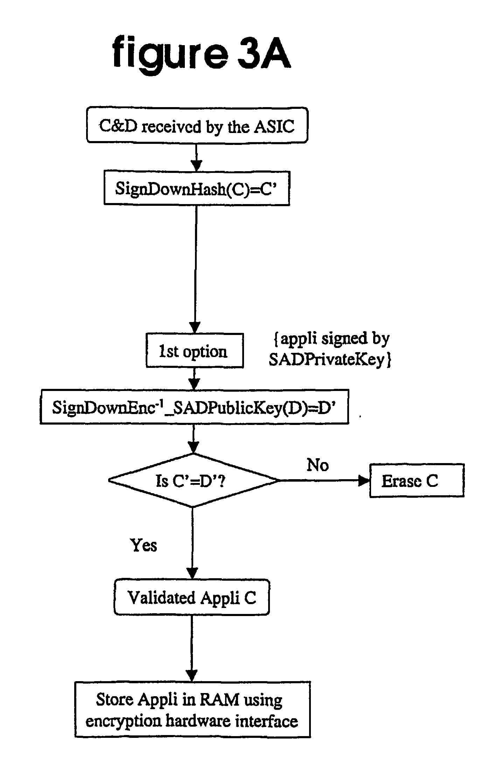

With reference to Fig. 3A, where like symbols as in Fig. 2A are used, C and D are received in the device. A hash value C' is obtained from C with a hash function read from ROM 14. D is decrypted to D' with the public key (SADPublicKey) read from ROM 14 using an algorithm stored in ROM 14. If C' equals D', the application code C is valid and enabled for execution by the device; otherwise, the application code C is erased. After validation of application code C, it is loaded into RAM 20, preferably after encryption in RAM encryption interface 18. The microprocessor 12 will have access to application code in RAM 20 without significant loss of performance even though it is encrypted and must be decrypted by RAM encryption interface 18 prior to its execution, the RAM encryption interface being implemented in hardware. Alternatively or in addition, the validated application code is permanently stored, e.g. in external memory 24, but preferably in encrypted form.

In a second example, a customer's private key (CustomerPrivateKey) is used for encryption of the hash value of application code C, rather than SADPrivateKey.

As used herein, "customer" means an organisation that offers valuable services and contents to end-users. Typically, the "customer" would purchase the device of the present invention, or at least the ASIC 10, from the Secured Architecture Designer (SAD) or a contract manufacturer of the SAD, and supply the device to an end-user in a finished product.

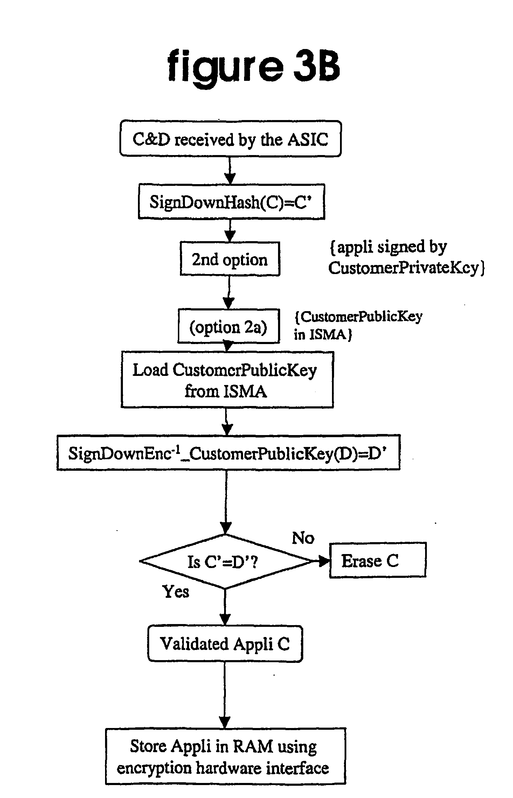

Now, in a first variant of this second example, the public part of a customer key pair is stored in internal secured memory area (ISMA) 16. As seen in Fig. 3B, that public key is read from ISMA 16 and used for verification of signature D. All other steps are the same as those in Fig. 3A.

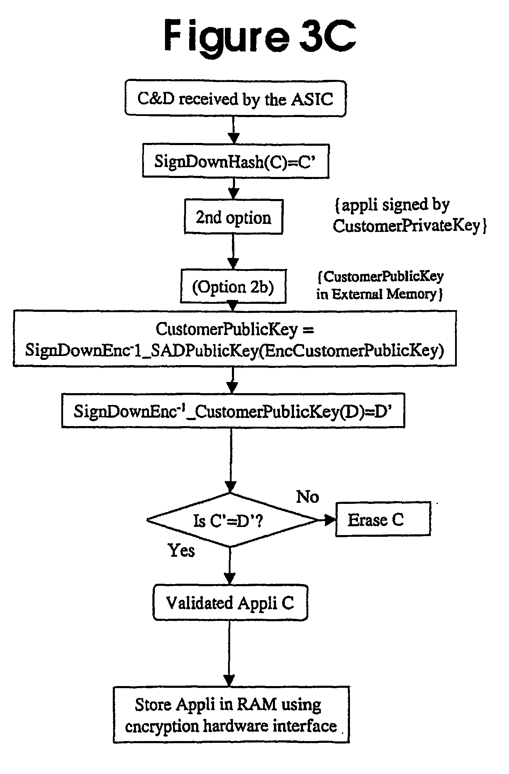

In a second variant of the second example, the Secure Architecture Designer's public key (SADPublicKey) is stored in ROM 14, and the customer's public key is signed with the SAD Private Key and can, therefore, be safely stored in the external memory 24. With reference to Fig. 3C, the CustomerPublicKey is first retrieved by decrypting, with SADPublicKey read from ROM 14, the encrypted customer's public key read from external memory 24, and then signature D is verified as in Fig. 3B.

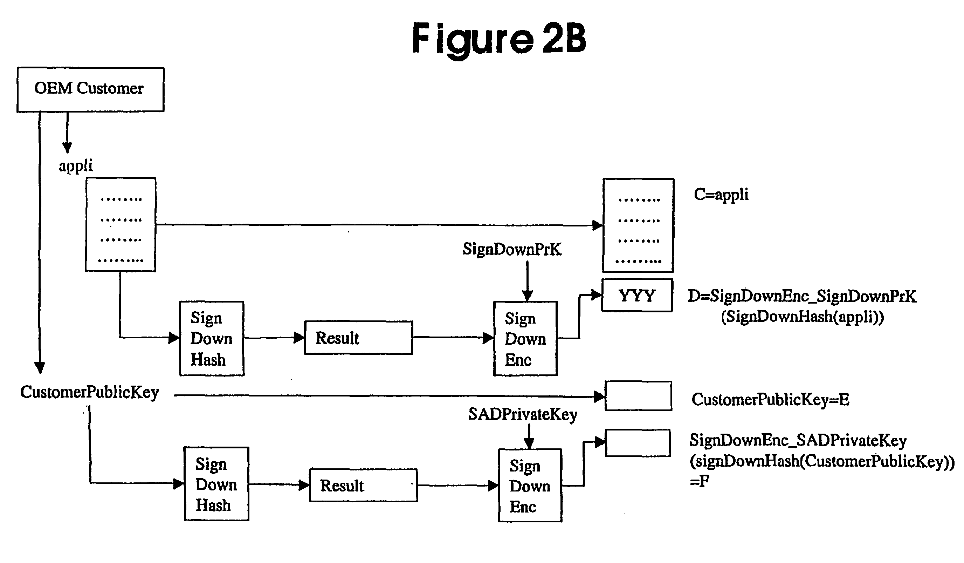

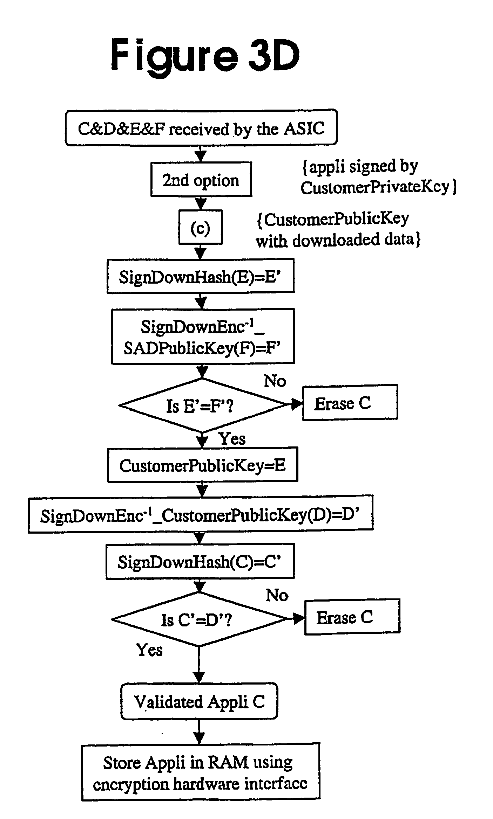

In a third variant of the second example, and with reference to Fig. 2B, a protected version of the CustomerPublicKey is down-loaded with the application code C into the device, so that the CustomerPublicKey will never be available in the external memory 24. Specifically, a hash value of CustomerPublic key is encrypted with SADPrivateKey to "F" and downloaded into the device along with CustomerPublicKey "E". With reference to Fig. 3D, verification of the application's signature is preceded by a verification of CustomerPublicKey. Downloaded CustomerPublicKey E is hashed and the hash value E' is compared with the result F' of decrypting, with SADPublicKey, the downloaded encrypted hash value F of CustomerPublicKey. If E' equals F', the verification proceeds to the verification of the application's signature D, as in Fig. 3C; otherwise, the application code C is rejected.

Except for the third variant of the second example of the signed download method, the downloaded application code can be stored in the external memory 24 of the device.

### Encrypted Down-Load

While the procedures disclosed so far ensure authenticity and integrity of an application to be executed by the device, a further proposal of the invention is to add confidentiality. As far as downloading of an application is concerned, confidentiality is achieved by encrypting the application code prior to its download.

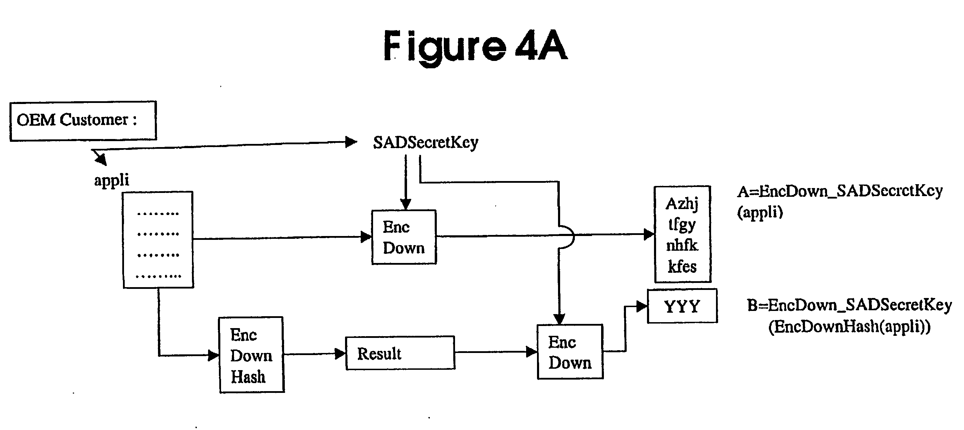

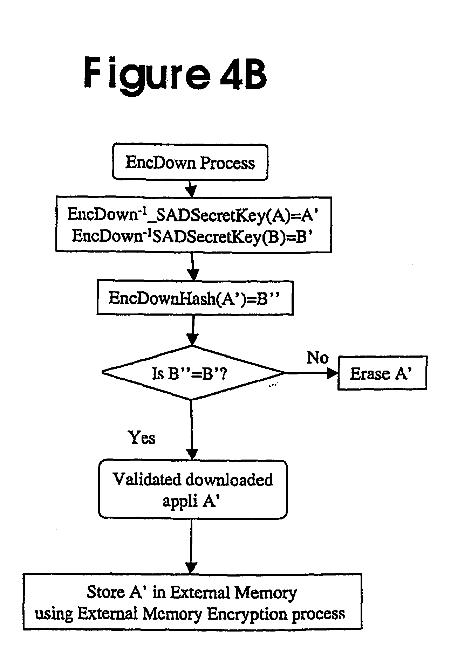

With reference to Fig. 4, application code to be downloaded into the device is encrypted to "A" with SADSecretKey, a secure architecture designer's symmetric key. A hash value of the application is encrypted to "B" with SADSecretKey. The encrypted application and its encrypted hash value, A and B, are now downloaded into the device. With reference to Fig. 4B, A and B are decrypted to A' ad B', respectively, using SADSecretKey read from the secured memory area 16. A' (the application code in the clear, if correctly decrypted) is hashed to B", and B" is compared with B' (the application's code hash value, if correctly decrypted). If B" equals B', the down-loaded and decrypted application code A' is validated; otherwise, A' is rejected.

The validated application code can now be used, e.g. it can be permanently stored in external memory 24 but, in the preferred embodiment, it will be encrypted before it is stored.

### External Memory Encryption

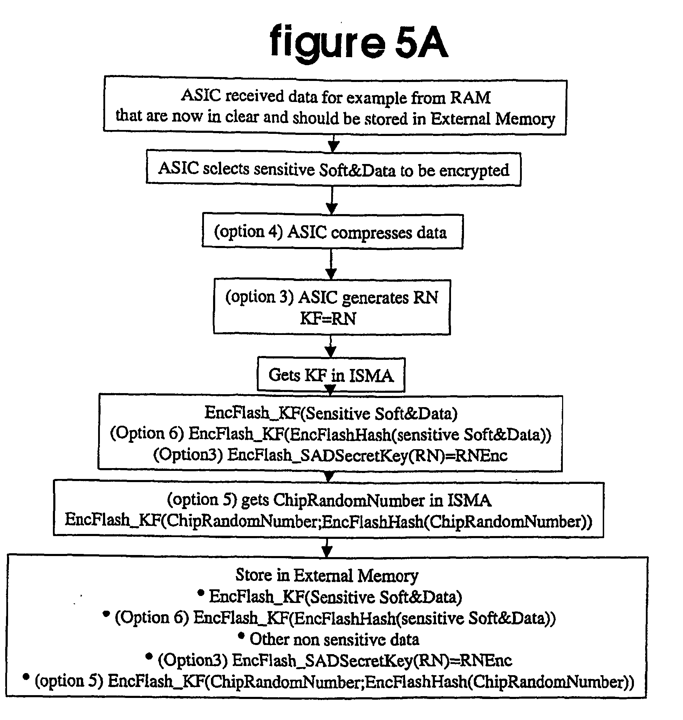

In the scenario depicted in Fig. 5A, application code is available from RAM 20 after a signed and/or encrypted download, for example. Being a validated application, it can be stored in permanent external memory 24, but preferably not in the clear as far as sensitive software code and data are concerned.

Initially, the ASIC thus selects sensitive code and data to be encrypted. Depending on the required level of security and flexibility, an encryption key KF is used directly or a derived key is used. As a first option, KF is the SADSecretKey read from secured memory area 16. The selected sensitive code and data are encrypted with that key and stored in external memory 24, along with other, non-sensitive code and data.

As a second option, KF is the ChipSecretKey, also read from the secured memory area.

As a third option, a random number "RN" is used as the encryption key, KF=RN, RN is encrypted with SADSecretKey read from the secured memory area 16, and the encrypted random number is stored in external memory 24 as "RNEnc".

As a fourth option, the sensitive code and data are compressed by the ASIC prior to encryption.

As a fifth option, a secret chip random number "ChipRandomNumber" is fetched from the secured memory area 16. The ChipRandomNumber and a hash value thereof are encrypted with encryption key KF to X and Y, respectively. The encrypted random number X and its encrypted hash value Y are stored in external memory 24, along with the encrypted sensitive code and data and other, non-sensitive code and data.

As a sixth option, the sensitive code and data are hashed and encrypted with key KF. The result EncH is stored in external memory 24 along with the encrypted sensitive code and data and other, non-sensitive code and data.

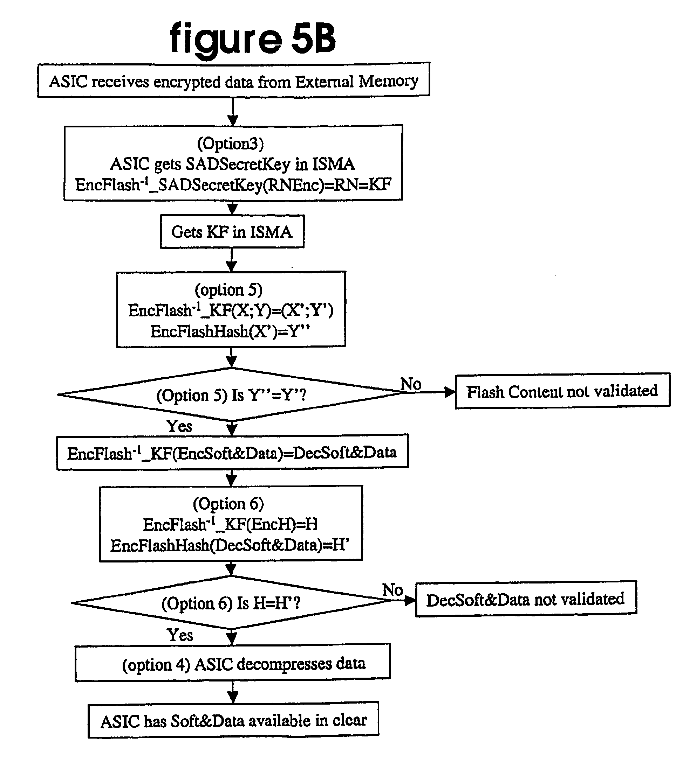

With reference now to Fig. 5B, and according to the respective option among options 1 to 6, the appropriate key KF must be determined. With key KF, the encrypted contents of the external memory 24 are decrypted and can be used, e.g. for execution of an application.

If it is option 1, KF is SADSecretKey, as read from the secured memory area 16.

If it is option 2, KF is ChipSecretKey, as read from the secured memory area 16.

If it is option 3, KF is obtained by decrypting the encrypted random number RNEnc read from the external memory 24 with the SADSecretKey read from secured memory area 16.

With option 4, the decrypted contents of external memory 24 are decompressed before they are used.

Option 5 requires an integrity check for the contents of external memory 24. The encrypted random number X and its encrypted hash value Y are decrypted to X' and Y' with KF, the decrypted random number X' is hashed to Y" and the result is compared with the decrypted hash value Y'. If Y" equals Y', the content of external memory 24 is validated; otherwise, it is rejected.

With option 6, integrity of the encrypted sensitive code and data is checked. Specifically, the encrypted hash value EncH is read from external memory 24 and decrypted to H with key KF. A hash value H' is calculated from the decrypted sensitive code and data. Only if both hash values H and H' are equal, the decrypted sensitive code and data are validated.

It is understood that options 4, 5 and 6 are not mutually exclusive and can be used separately or jointly with any of options 1 to 3.

### Chip - External Memory Pairing

To further protect the device, the invention proposes to uniquely link the chip of the device with the contents of the external memory 24 (External Memory - ASIC Pairing).

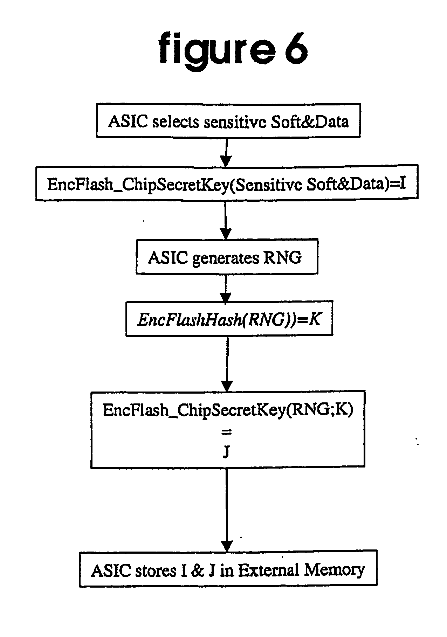

With reference to Fig. 6, sensitive application code and data are identified within external memory 24 and encrypted to "I" with secret chip key "ChipSecretKey" read from the secured memory area 16, and I is stored in external memory 24. The sensitive application code and data are such that proper execution of the application is impossible without successfully decrypting the code and data. The random number generator within the chip of the device generates a random number "RNG" which is hashed to "K". The random number RNG and its hash value K are encrypted to "J" with "ChipSecretKey", and J is also stored in external memory 24. The chip is now uniquely linked to the external memory 24.

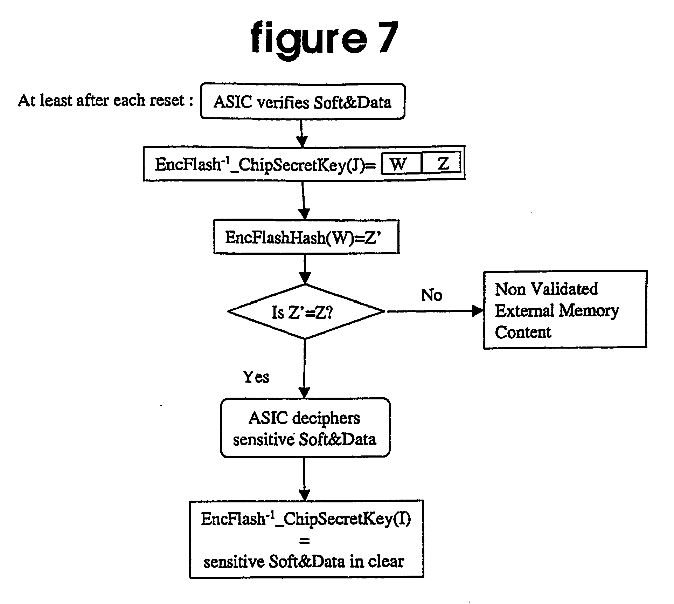

With reference to Fig. 7, the chip verifies its pairing with external memory 24 at least after each reset of the device. Specifically, J (the encrypted random number and its hash value) is read from external memory and decrypted with "ChipSecretKey" to "W" and "Z". The calculated hash value of W, " Z' ", is compared with the decrypted hash value Z of random number W. Only if Z and Z' are equal, pairing is confirmed and the sensitive application code and data can be retrieved from I read from the external memory by decrypting I; otherwise, some appropriate action is taken to prevent unintended use of the device.

### Chip Personalization

Immediately after its manufacturing, the chip of the device only has a basic functionality by software and data stored in ROM 14. Software initially stored in ROM 14 includes a boot procedure, a download routine, a cryptography library and other basic functions. Data initially stored in ROM 14 includes a Serial Number, the SADPublicKey and a hash value over the ROM content. The secure memory area 16 will be empty, and the chip will be without defence against unintended use.

Therefore, according to a further proposal of the invention, the chip is personalized before it is delivered to a customer.

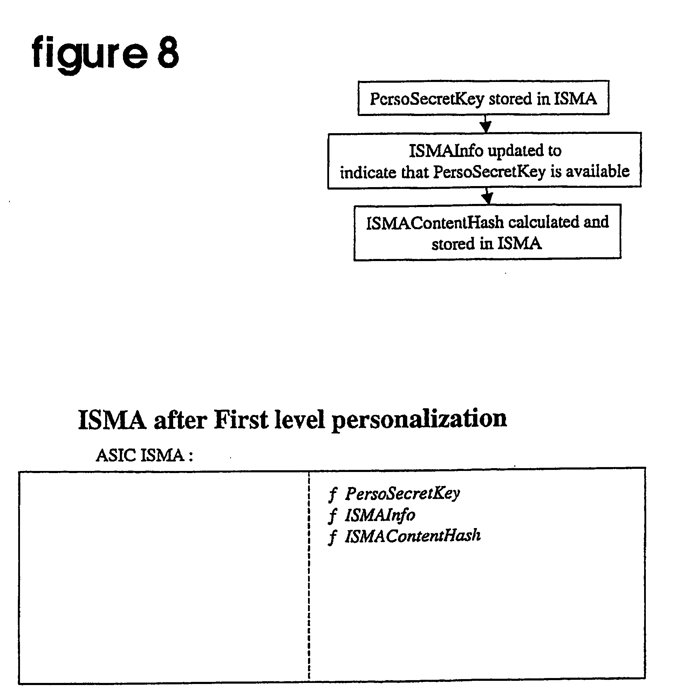

With reference to Fig. 8, a first level personalization of the chip includes storing a secret symmetric personalization key "PersoSecretKey" in the secured memory area 16 (ISMA). An internal information field within secured memory area 16, "ISMAInfo", is updated to indicate that PersoSecretKey is available. A hash value ISMAContentHash over the content of the secured memory area 16 is calculated and also stored in the secured memory area.

The chip can now be shipped to a customer where a second level personalization will be made before delivery of the chip to an end-user within a finished product. Alternatively, the second level personalization is already performed by the Secure Architecture Designer (SAD) before the chip is shipped to the customer or end-user.

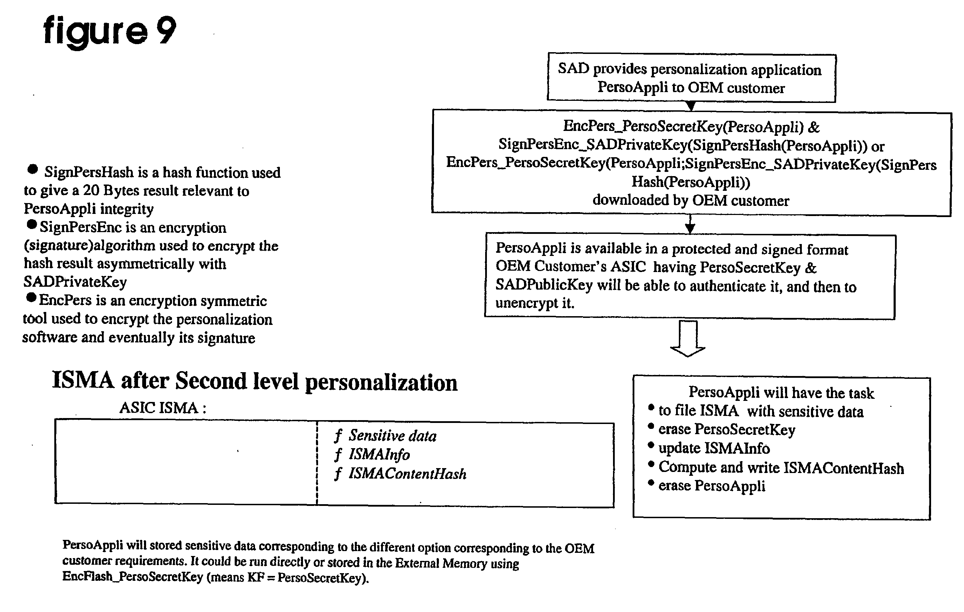

With reference to Fig. 9, a second level personalization is illustrated which can be performed by the Secure Architecture Designer or by a customer. The Secure Architecture Designer provides a particular personalization application the purpose of which is to write into the device sensitive data and information pertaining to the intended use of the device. For download into the device, the personalization application "PersoAppli" is encrypted with the secret symmetric personalization key "PersoSecretKey", and a hash value of the application code is calculated and signed with a Secure Architecture Designer's private key "SADPrivateKey". Alternatively, both the application code and its hash value signed with "SADPrivateKey" are encrypted with the secret symmetric key "PersoSecretKey" and downloaded into the device. The device will be able to decrypt the encrypted application code with "PersoSecretKey" read from the secured memory area 16, and to check the signature of its hash value with "SADPublicKey" read from ROM 14. After execution of the personalization application by the device, all sensitive data and information have been written into the device, "ISMAInfo" is updated, a new "ISMAContentHash is computed and stored, "PersoSecretKey" is erased and the application is also erased.

### Variable Terminal Assignment

As should be clear from the preceding description, the method of the present invention requires access to protected parts of the chip in order to initiate the chip with basic confidential and sensitive data and, in particular, those written into secured memory area 16. In order to protect the chip against non-authorized access to sensitive parts, the invention proposes a secret access channel that must be used to access sensitive parts of the device.

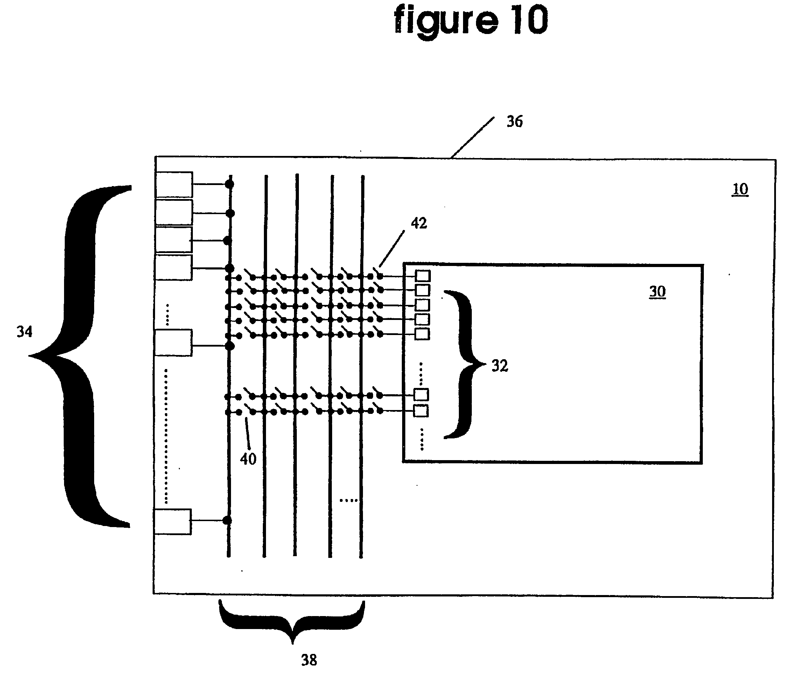

With reference to Fig. 10, the ASIC includes a silicon core body 30 with a number of internal chip connections 32 and a number of external terminals 34 (pins or pads). Within the package 36 of the ASIC, an internal row of parallel conductor lines 38 permits to connect any of the internal chip connections to any of the external terminals 34. At least some of the assignments between internal chip connections 32 and external terminals 34 are variable and are materialised by selectively operated switches such as switches 40, 42 in Fig. 10. In order to establish a secret access channel, selective ones of the switches 40, 42 are closed and, after use of the secret channel such as for the above personalization steps, can be opened and left open.

### Intrusion Detection

Whenever an intrusion of any kind is detected, appropriate steps are taken to prevent unintended use of the device. Typically, the contents of the secured memory area 16 are erased.

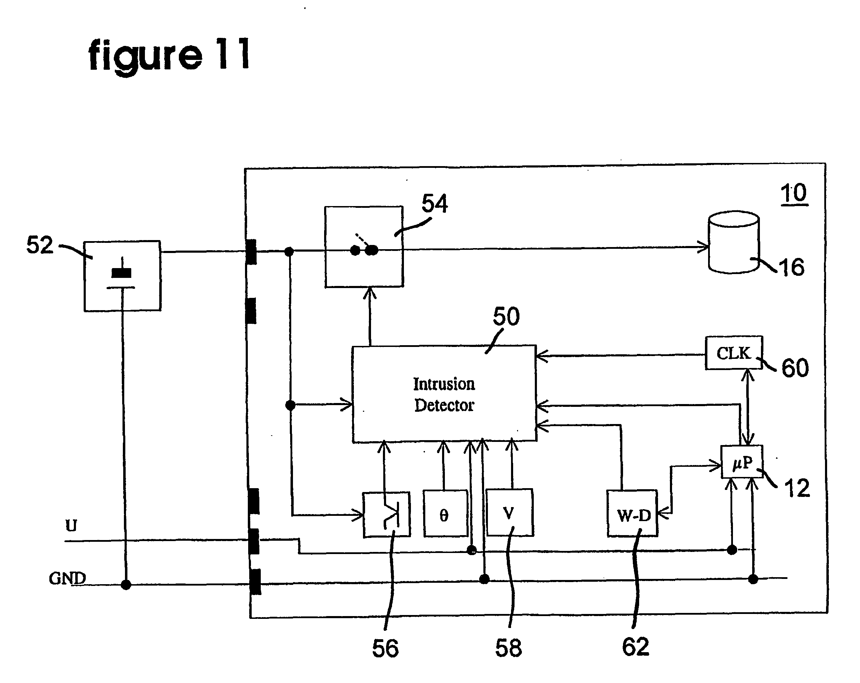

With reference to Fig. 11, the ASIC 10 includes an intrusion detector 50. In one example, the secured memory area 16 within ASIC 10 is a RAM that needs a continuous power supply to maintain information stored therein. Secured memory area 16 (RAM) receives power from an external battery 52 connected to external supply and ground terminals of the ASIC. A controllable switch 54 is inserted in the supply path of memory area 16. Switch 54 is normally closed and is controlled by intrusion detector 50. Intrusion detector 50 has a number of inputs connected to corresponding monitoring devices. One such monitor device can be a photo-transistor 56 that would detect any light penetrating into the chip package upon physical attack of its envelope. Another monitor device can be a temperature sensor 58 that would detect any abnormal temperature. The intrusion detector 50 is also connected to the main device power supply and to ground and would detect any abnormal supply voltage or power consumption. Yet another input to intrusion detector 50 is connected to the system clock generator 60 and would detect any abnormal clock rate. A watch-dog 62 connected to a further input of intrusion detector 50 would detect any abnormal absence of activity from microprocessor 12 within a given time. Any failure of an integrity, authenticity or signature check is also signalled from microprocessor 12 to the intrusion detector 50.

Each abnormal condition signalled to the intrusion detector 50 by any of the monitor devices would cause the switch 54 to be opened, and all information within the secured memory area 16 would be erased.

## Claims

1. A method of protecting a device against unintended use in a secure environment, the device being adapted to execute applications that involve conditional access to at least one of valuable contents and services, and the device including an integrated circuit (10) that has a central processing unit (12), an internal memory (14, 16) and input/output connections for external memory (20, 24) incorporated on a single chip, where
- said external memory (24) and said chip are uniquely linked by encrypting sensitive application code and data with a secret key stored in a secured memory area (16) of the internal memory, the encrypted code and data being then stored in said external memory (24), **characterized in that**
- a random number and a hash value of the random number are also encrypted with said secret key and stored in the external memory (24), the encrypted random number and hash value are decrypted with the secret key at least on each reset of the device, and decryption of the encrypted sensitive code and data are only allowed if the decrypted hash value equals a hash value calculated from the decrypted random number.

2. The method of claim 1, wherein the application code is downloaded into the device, encrypted with the secret key and stored in the external memory (24).

3. The method of claim 1 or 2, wherein the device is adapted to execute applications that involve secure transactions and/or conditional access to valuable contents and/or services; and wherein any application code down-loaded into the device is signed with a private key of an asymmetric key pair and proper execution of the application is subject to a verification of the signature with a public key of said key pair.

4. A method according to any of the preceding claims, **characterized in that**, after manufacturing of the chip and prior to delivery to a customer, a secret access channel is established to write a secret personalization key into the secure memory area (16).

5. The method of claim 4, wherein the content of the secure memory area (16) is protected by calculating a hash value of the secure memory area content and writing the hash value into the secure memory area.

6. The method of claim 4 or 5, wherein a personalization application is signed with a Secure Architecture Designer's private key and then encrypted with the secret personalization key, the personalization application is loaded into the device and decrypted with the secret personalization key, the signature of the personalization application is checked with the Secure Architecture Designer's public key, and the personalization application is executed to write sensitive personalization data into the secure memory area (16).

7. The method of claim 4 or 5, wherein a personalization application is encrypted with a secret symmetric key stored in the secured memory area (16) of the device, a hash value of the personalization application is signed with a Secure Architecture Designer's private key, the encrypted personalization application and the signed hash value are loaded into the device, the personalization application is decrypted with the secret symmetric key, the signature of the hash value is checked with the Secure Architecture Designer's public key stored in the read only memory (14) of the device, and the personalization application is executed to write sensitive personalization data into the secure memory area.

8. The method of claim 4 or 5, wherein a personalization application and a hash value of the personalization application signed with a Secure Architecture Designer's private key are encrypted with a secret symmetric key stored in the secured memory area (16) of the device, the encrypted personalization application and signed hash value are loaded into the device, the personalization application and signed hash value are decrypted with the secret symmetric key, the signature of the hash value is checked with the Secure Architecture Designer's public key stored in the read only memory of the device, and the personalization application is executed to write sensitive personalization data into the secure memory area.

9. A method according to any of the preceding claims, wherein the external memory (20, 24) includes a RAM (20) and the chip has a bi-directional encryption/decryption hardware interface ensuring high performance and already encrypted exchange of data between the chip and the RAM.

10. The method according to any of claims 1 to 9, wherein said chip is provided with a random number generator and a hash value is obtained from a random number generated by the random number generator, the random number with its hash value are encrypted with said secret key, and the encrypted random number with its hash value are stored in the external memory (24).

## Patentansprüche

1. Verfahren zum Schutz einer Vorrichtung vor unbeabsichtigter Benutzung in einer sicheren Umgebung, wobei die Vorrichtung Anwendungen ausführen kann, die eine Zugangskontrolle zu werthaltigen Inhalten und/oder Dienstleistungen beinhalten, und wobei die Vorrichtung einen integrierten Schaltkreis (10) aufweist, der eine Zentraleinheit (12), einen internen Speicher (14, 16) sowie Eingangs/Ausgangs-Anschlüsse für einen externen Speicher (20, 24) auf einem Einzelchip enthält, wobei
- der externe Speicher (24) und der Chip durch die Verschlüsselung eines sensitiven Anwendungscodes und sensitiver Daten mit einem in einem gesicherten Speicherbereich (16) des internen Speichers gespeicherten geheimen Schlüssel eindeutig miteinander verknüpft werden, wobei der verschlüsselte Code und die verschlüsselten Daten dann im externen Speicher (24) gespeichert werden, **dadurch gekennzeichnet, dass**
- eine Zufallszahl und ein Hash-Wert der Zufallszahl ebenfalls mit dem geheimen Schlüssel verschlüsselt und im externen Speicher (24) gespeichert werden, die verschlüsselte Zufallszahl und der verschlüsselte Hash-Wert wenigstens bei jedem Rücksetzen der Vorrichtung mit dem geheimen Schlüssel entschlüsselt werden, und die Entschlüsselung des verschlüsselten sensitiven Codes und der verschlüsselten sensitiven Daten nur zugelassen wird, wenn der entschlüsselte Hash-Wert gleich einem aus der entschlüsselten Zufallszahl berechneten Hash-Wert ist.

2. Verfahren nach Anspruch 1, bei dem der Anwendungscode in die Vorrichtung heruntergeladen, mit dem geheimen Schlüssel verschlüsselt und im externen Speicher (24) gespeichert wird.

3. Verfahren nach Anspruch 1 oder 2, bei dem die Vorrichtung Anwendungen ausführen kann, die sichere Transaktionen und/oder eine Zugangskontrolle zu werthaltigen Inhalten und/oder Dienstleistungen beinhalten, und bei dem jeder Anwendungscode, der in die Vorrichtung heruntergeladen wird, mit einem privaten Schlüssel eines asymmetrischen Schlüsselpaares signiert wird, und die ordnungsgemäße Ausführung der Anwendung einer Verifizierung der Signatur mit einem öffentlichen Schlüssel des Schlüsselpaares unterliegt.

4. Verfahren nach einem der vorhergehenden Ansprüche, **dadurch gekennzeichnet, dass** nach Herstellung des Chips und vor Auslieferung an einen Kunden ein geheimer Zugangskanal hergestellt wird, um einen geheimen Personalisierungsschlüssel in den sicheren Speicherbereich (16) zu schreiben.

5. Verfahren nach Anspruch 4, bei dem der Inhalt des sicheren Speicherbereichs (16) geschützt wird, indem ein Hash-Wert des Inhalts des sicheren Speicherbereichs berechnet und der Hash-Wert in den sicheren Speicherbereich geschrieben wird.

6. Verfahren nach Anspruch 4 oder 5, bei dem eine Personalisierungsanwendung mit einem privaten Schlüssel des Designers der sicheren Architektur signiert und dann mit dem geheimen Personalisierungsschlüssel verschlüsselt wird, die Personalisierungsanwendung in die Vorrichtung geladen und mit dem geheimen Personalisierungsschlüssel entschlüsselt wird, die Signatur der Personalisierungsanwendung mit dem öffentlichen Schlüssel des Designers der sicheren Architektur überprüft wird und die Personalisierungsanwendung ausgeführt wird, um sensitive Personalisierungsdaten in den sicheren Speicherbereich (16) zu schreiben.

7. Verfahren nach Anspruch 4 oder 5, bei dem eine Personalisierungsanwendung mit einem in dem gesicherten Speicherbereich (16) der Vorrichtung gespeicherten geheimen, symmetrischen Schlüssel verschlüsselt wird, ein Hash-Wert der Personalisierungsanwendung mit einem privaten Schlüssel des Designers der sicheren Architektur signiert wird, die verschlüsselte Personalisierungsanwendung und der signierte Hash-Wert in die Vorrichtung geladen werden, die Personalisierungsanwendung mit dem geheimen, symmetrischen Schlüssel entschlüsselt wird, die Signatur des Hash-Wertes mit dem im Festwertspeicher (14) der Vorrichtung gespeicherten öffentlichen Schlüssel des Designers der sicheren Architektur überprüft wird und die Personalisierungsanwendung ausgeführt wird, um sensitive Personalisierungsdaten in den sicheren Speicherbereich zu schreiben.

8. Verfahren nach Anspruch 4 oder 5, bei dem eine Personalisierungsanwendung und ein Hash-Wert der Personalisierungsanwendung, der mit einem privaten Schlüssel des Designers der sicheren Architektur signiert ist, mit einem in dem gesicherten Speicherbereich (16) der Vorrichtung gespeicherten geheimen, symmetrischen Schlüssel verschlüsselt werden, die verschlüsselte Personalisierungsanwendung und der signierte Hash-Wert in die Vorrichtung geladen werden, die Personalisierungsanwendung und der signierte Hash-Wert mit dem geheimen, symmetrischen Schlüssel entschlüsselt werden, die Signatur des Hash-Wertes mit dem im Festwertspeicher der Vorrichtung gespeicherten öffentlichen Schlüssel des Designers der sicheren Architektur überprüft wird und die Personalisierungsanwendung ausgeführt wird, um sensitive Personalisierungsdaten in den sicheren Speicherbereich zu schreiben.

9. Verfahren nach einem der vorhergehenden Ansprüche, bei dem der externe Speicher (20, 24) einen Direktzugriffsspeicher (20) aufweist und der Chip eine bidirektionale Verschlüsselungs-/Entschlüsselungs-Hardwareschnittstelle hat, die eine hohe Performanz und einen bereits verschlüsselten Austausch von Daten zwischen dem Chip und dem Direktzugriffsspeicher gewährleistet.

10. Verfahren nach einem der Ansprüche 1 bis 9, bei dem der Chip mit einem Zufallszahlengenerator versehen ist und aus einer vom Zufallszahlengenerator erzeugten Zufallszahl ein Hash-Wert erhalten wird, die Zufallszahl mit ihrem Hash-Wert mit dem geheimen Schlüssel verschlüsselt wird und die verschlüsselte Zufallszahl mit ihrem Hash-Wert im externen Speicher (24) gespeichert wird.

## Revendications

1. Procédé de protection d'un dispositif à l'encontre d'une utilisation non voulue dans un environnement sécurisé, dans lequel le dispositif peut exécuter des applications qui comprennent un contrôle d'accès à au moins des contenus et/ou services de valeur, et le dispositif comprenant un circuit intégré (10) qui possède une unité centrale (12), une mémoire interne (14, 16) et des connexions d'entrée/sortie pour la mémoire externe (20, 24), incorporées sur une monopuce, dans lequel
- la mémoire externe (24) et la puce sont liées de manière univoque par cryptage du code sensible d'application et des données sensibles au moyen d'une clé confidentielle mémorisée dans une zone de mémoire (16) sécurisée de la mémoire interne, le code crypté et les données cryptées étant ensuite mémorisés dans la mémoire externe (24), **caractérisé en ce que**
- un nombre aléatoire et une valeur de hachage du nombre aléatoire sont également cryptés avec la clé confidentielle et mémorisés dans la mémoire externe, le nombre aléatoire crypté et la valeur de hachage cryptée sont au moins décryptés avec la clé confidentielle au moins à chaque réinitialisation du dispositif, et le décryptage du code sensible crypté et des données sensibles cryptées n'est permis que si la valeur de hachage est égale à une valeur de hachage calculée à partir du nombre aléatoire décrypté.

2. Procédé selon la revendication 1, dans lequel le code d'application est téléchargé dans le dispositif, crypté avec la clé confidentielle et mémorisé dans la mémoire externe (24).

3. Procédé selon la revendication 1 ou 2, dans lequel le dispositif peut exécuter des applications qui comprennent des transactions sécurisées et/ou un contrôle d'accès à des contenus et/ou services de valeur, et dans lèquel chaque code d'application qui est téléchargé dans le dispositif est signé avec une clé privée d'une paire de clés asymétriques, et l'exécution correcte de l'application est soumise à une vérification de la signature avec une clé publique de la paire de clés.

4. Procédé selon l'une des revendications précédentes, **caractérisé en ce que** après la fabrication de la puce et avant la fourniture à un client est réalisé un canal d'accès confidentiel pour écrire une clé de personnalisation confidentielle dans la zone de mémoire (16) sécurisée.

5. Procédé selon la revendication 4, dans lequel le contenu de la zone de mémoire sécurisée est protégé en calculant une valeur de hachage du contenu de la zone de mémoire sécurisée et en écrivant la valeur de hachage dans la zone de mémoire sécurisée.

6. Procédé selon la revendication 4 ou 5, dans laquelle une application de personnalisation est signée avec une clé privée du designer d'architecture sécurisée et ensuite cryptée avec la clé de personnalisation confidentielle, l'application de personnalisation est chargée dans le dispositif et décryptée avec la clé de personnalisation confidentielle, la signature de l'application de personnalisation est vérifiée avec la clé publique du designer d'architecture sécurisée et l'application de personnalisation est exécutée pour écrire des données de personnalisation sensibles dans la zone de mémoire (16) sécurisée.

7. Procédé selon la revendication 4 ou 5, dans lequel une application de personnalisation est décryptée avec une clé symétrique confidentielle mémorisée dans la zone de mémoire (16) sécurisée du dispositif, une valeur de hachage de l'application de personnalisation est signée avec une clé privée du designer d'architecture sécurisée, l'application de personnalisation cryptée et la valeur de hachage signée sont chargées dans le dispositif, l'application de personnalisation est décryptée avec la clé symétrique confidentielle, la signature de la valeur de hachage est vérifiée avec la clé publique, mémorisée dans la mémoire à lecture seule (14) du dispositif, du designer d'architecture sécurisée et l'application de personnalisation est exécutée pour écrire des données de personnalisation sensibles dans la zone de mémoire sécurisée.

8. Procédé selon la revendication 4 ou 5, dans lequel une application de personnalisation et une valeur de hachage de l'application de personnalisation, qui est signée avec la clé privée du designer d'architecture sécurisée, sont cryptées avec une clé symétrique confidentielle mémorisée dans la zone de mémoire (16) sécurisée du dispositif, l'application de personnalisation cryptée et la valeur de hachage signée sont chargées dans le dispositif, l'application de personnalisation et la valeur de hachage signée sont décryptées avec la clé symétrique confidentielle, la signature de la valeur de hachage est vérifiée avec la clé publique mémorisée dans la mémoire à lecture seule du dispositif, du designer d'architecture sécurisée, et l'application de personnalisation est exécutée pour écrire des données de personnalisation sensibles dans la zone de mémoire sécurisée.

9. Procédé selon l'une des revendications précédentes, dans lequel la mémoire externe (20, 24) présente une mémoire d'accès direct (20) et la puce a une interface de matériel de cryptage/décryptage bidirectionnelle qui assure une haute performance et un échange déjà crypté de données entre la puce et la mémoire à accès direct.

10. Procédé selon l'une des revendications 1 à 9, dans lequel la puce est pourvue d'un générateur de nombres aléatoires et, à partir d'un nombre aléatoire engendré par le générateur de nombres aléatoires est obtenue une valeur de hachage, le nombre aléatoire avec sa valeur de hachage est décryptée avec la clé confidentielle, et le nombre aléatoire crypté est mémorisé avec sa valeur de hachage dans la mémoire externe (24).
